# EUROPEAN PATENT APPLICATION

(11) **EP 4 563 208 A1**
(43) Date of publication of application: **04.06.2025**
(21) Application number: 24197860.0
(22) Date of filing: 02.09.2024
(51) Int. Cl.: B01D 1/22, B01F 31/22

(54) **LIQUID PROCESSING APPARATUS AND LIQUID PROCESSING SYSTEM INCLUDING THE SAME**

(30) Priority: 01.12.2023 KR 20230172638
(71) Applicant: Samsung Electronics Co., Ltd., Gyeonggi-do, 16677 (KR)
(72) Inventor: KIM, Seungyeon, 16678 Suwon-si (KR); KIM, Bosung, 16678 Suwon-si (KR); SEO, Seoungjin, 16678 Suwon-si (KR); CHANG, Minsu, 16678 Suwon-si (KR); JANG, Jun-Won, 16678 Suwon-si (KR); JEON, Hyunjeong, 16678 Suwon-si (KR); CHOI, Hyun Do, 16678 Suwon-si (KR); HEO, Dal, 16678 Suwon-si (KR); HONG, Wooram, 16678 Suwon-si (KR)
(74) Representative: Elkington and Fife LLP

(57) **Abstract**

There is provided a liquid processing apparatus (10) including a container (110), that stores a liquid, a chamber (120), that accommodates at least a portion of the container (110), at least one sensor (130) in the chamber (120), a sealing apparatus (140), connected to the chamber, that seals the container; and a driving apparatus (150) provides a driving force to the chamber (120) and the sealing apparatus (140), and where the chamber (120) and the sealing apparatus (140) have an orbital/elliptic motion while staying in a unidirectional state, and where the at least one sensor (130) is sensing an inner portion of the container (110).

## Description

### FIELD OF THE INVENTION

Methods and apparatuses consistent with embodiments relate to a liquid processing apparatus and a liquid processing system including the same.

### BACKGROUND OF THE INVENTION

In a liquid processing apparatus, there is a need for analysis technology that may apply an external force to a liquid while simultaneously analyzing the liquid in real time.

### SUMMARY OF THE INVENTION

One or more embodiments may address at least the problems and/or disadvantages described above, and other disadvantages not described above. Also, the embodiments are not required to overcome and may not overcome any of the problems and disadvantages described above.

According to an aspect of an embodiment, a liquid processing apparatus includes: a container configured to store a liquid; a chamber configured to accommodate at least a portion of the container; at least one sensor in the chamber; a sealing apparatus connected to the chamber and configured to seal the container; and a driving apparatus configured to provide a driving force to the chamber and the sealing apparatus, the driving force causing a reciprocal motion of the chamber and the sealing apparatus, and the chamber and the sealing apparatus are configured to, by the reciprocal motion, reciprocate while staying in a unidirectional state in which a position of the chamber relative to a position of the sealing apparatus remains constant, and the at least one sensor is configured to sense an inner portion of the container.

Proposed concepts relate to an automatic vaporization device enabling the rapid evaporation of a solvent. Embodiments may, for example, provide an automatic vaporization device capable of real-time analysis through sensor replacement and internal arrangement.

By way of example, a proposed automatic vaporization device may have a structure that may adjust the pressure and temperature inside a liquid container and rotate a liquid in the container. This automatic vaporization device may include a structure that includes multiple layers of covers simultaneously, allowing for the replacement and attachment of various sensors inside and outside the liquid container. Such an automatic vaporization device may be applied to a solvent vaporization process in the automatic synthesis process, such that the solvent of a liquid is rapidly vaporized by utilizing a multi-degree-of-freedom manipulator while simultaneously conducting real-time analysis.

Embodiments may enable an automatic high-speed drying device accompanied by real-time analysis. Such an automatic high-speed drying device may be applied not only to automatic material development laboratories but also to fields such as pharmaceuticals and food development and manufacturing.

Proposed embodiments may comprise a structure in which a liquid container is operated without relative rotational motion, allowing a solution to rotate. Embodiments may include a cover structure in which various sensors are combined.

Some embodiments may comprise a structure in which a cover with a sensor is placed at the entrance of the liquid container, allowing real-time analysis of the interior of the container.

Some embodiments may comprise a structure in which different covers are placed around a device such that a cover is replaced with another one in real time.

In some embodiments, a structure of the handle and guide hole of the cover may be configured to compensate for a gripping error of the manipulator.

Embodiments may comprise a structure in which a multi-degree-of-freedom manipulator may manipulate detachable elements (e.g., a vial and a cover).

In the unidirectional state, the chamber and the sealing apparatus may reciprocate together along a trajectory of a closed curve and without rotating with respect to each other.

The driving apparatus may include: a frame including an actuator; a first rotation plate disposed on an upper side of the frame and configured to rotate around a first axis; a second rotation plate disposed on the upper side of the frame and configured to rotate around a second axis; a first connector configured to connect the first rotation plate to the chamber; and a second connector configured to connect the second rotation plate to the sealing apparatus.

A central axis of the first connector is offset with respect to the first axis of the first rotation plate, and a central axis of the second connector is offset with respect to the second axis of the second rotation plate.

The sealing apparatus may include: a cover disposed on an upper side of an opening of the container; and a connecting element including a first end supporting the cover and a second end connected to the second connector.

The chamber may be configured to heat the container, and the cover may be configured to any of adjust pressure in the container and direct a gas, generated by vaporization of the liquid, to flow externally from the liquid processing apparatus.

The liquid processing apparatus may further include: a cap assembly disposed between the container and the cover, and the cap assembly may be detachably attached to the container and the cover.

The cap assembly may include a first cap, and the first cap may include: a first body element; a first gripping element extending from a side surface of the first body element; and at least one other sensor, other than the at least one sensor, disposed on one surface of the first body element and facing an inner side of the container.

The first cap may further include at least one first hole in the first body element.

The cap assembly may further include a second cap disposed between the first cap and the container, and the second cap may include: a second body element; a second gripping element extended from a side surface of the second body element; a window at a surface of the second body element; and at least one second hole in the window.

The at least one first hole and the at least one second hole may be unaligned relative to each other.

The cover may be further configured to direct the gas, generated by vaporization of the liquid, to flow externally from the liquid processing apparatus by flowing through the at least one first hole and the at least one second hole to the cover.

The second cap may be configured to prevent the liquid, dispersed by heating, from moving to the first cap.

A bending region may be on any of the first body element of the first cap and the second body element of the second cap, and the bending region may include an elastic material.

According to an aspect of an embodiment, a liquid processing system includes: a liquid processing apparatus configured to process a liquid; and an operating apparatus disposed on an outer side of the liquid processing apparatus, and the liquid processing apparatus includes: a container configured to store a liquid; a chamber configured to accommodate at least a portion of the container; at least one sensor disposed in the chamber; a sealing apparatus connected to the chamber and configured to seal the container; and a driving apparatus configured to provide a driving force to the chamber and the sealing apparatus, the driving force causing a reciprocal motion of the chamber and the sealing apparatus, and the chamber and the sealing apparatus are configured to, by the reciprocal motion, reciprocate together along a trajectory of a closed curve and without rotating with respect to each other such that a position of the chamber relative to a position of the sealing apparatus remains constant, and the at least one sensor is configured to sense the container.

The sealing apparatus may include: a cover disposed on an upper side of an opening of the container; and a connecting element comprising one end supporting the cover and another end connected to a driving apparatus, and the liquid processing apparatus may further include a cap assembly disposed between the container and the cover, and the operating apparatus may be configured to replace at least one of the container and the cap assembly.

The cap assembly may include a first cap, and the first cap may include: a first body element; a first gripping element extended from a side surface of the first body element; at least one other sensor, other than the at least one sensor, disposed on one surface of the first body element and facing an inner side of the container; and at least one first hole in the first body element.

The cap assembly may further include a second cap disposed between the first cap and the container, and the second cap may include: a second body element; a second gripping element extending from a side surface of the second body element; a window formed on one surface of the second body element; and at least one second hole in the window.

The liquid processing system may further include at least one of: a bending region on any of the first body element of the first cap and the second body element of the second cap, the bending region including an elastic material, and a guide hole at any of an edge of the first body element of the first cap and an edge of the second body element of the second cap.

The chamber may be configured to heat the container, and the cover may be configured to any of adjust pressure in the container and direct a gas, generated by vaporization of the liquid, to flow externally from the liquid processing apparatus, and the at least one first hole and the at least one second hole may be unaligned relative to each other, and the cover may be further configured to direct the gas, generated by vaporization of the liquid, to flow externally from the liquid processing apparatus by flowing through the at least one first hole and the at least one second hole to the cover, and the second cap may be configured to prevent the liquid, dispersed by heating, from moving to the first cap.

### BRIEF DESCRIPTION OF THE DRAWINGS

The above and/or other aspects will be more apparent from descriptions of certain embodiments referring to the accompanying drawings, in which:
FIG. 1 is a diagram illustrating a liquid processing apparatus according to one or more embodiments;
FIG. 2 is a diagram illustrating a liquid processing apparatus according to one or more embodiments;
FIG. 3A, FIG. 3B, FIG. 3C, and FIG. 3D are diagrams illustrating a chamber and a sealing apparatus of the liquid processing apparatus of FIG. 1 in a reciprocating state, according to one or more embodiments;
FIG. 4 is a diagram illustrating an arrangement of a cover, a first cap, and a container of the liquid processing apparatus of FIG. 1, according to one or more embodiments;
FIG. 5 is a diagram illustrating an interchangeable relationship depicting the possibility of replacing the first cap of the liquid processing apparatus of FIG. 1 with various other first caps, according to one or more embodiments;
FIG. 6 is a cross-sectional view illustrating a first cap according to one or more embodiments;
FIG. 7 is a rear view illustrating a first cap according to one or more embodiments;
FIG. 8 is a cross-sectional view illustrating a first cap according to one or more embodiments;
FIG. 9 is a cross-sectional view illustrating a second cap according to one or more embodiments;
FIG. 10 is a rear view illustrating a second cap according to one or more embodiments;
FIG. 11 is a rear view illustrating a state in which a first cap is coupled to a second cap, according to one or more embodiments;
FIG. 12 is a cross-sectional view illustrating a state in which a first cap is coupled to a second cap, according to one or more embodiments;
FIG. 13 is a diagram illustrating a liquid processing system according to one or more embodiments; and
FIG. 14, FIG. 15, and FIG. 16 are diagrams illustrating an operating state of a liquid processing system according to one or more embodiments.

### DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one component is described as being "connected", "coupled", or "attached" to another component, it should be understood that one component may be connected or attached directly to another component, and an intervening component may also be "connected", "coupled", or "attached" to the components.

The same name may be used to describe an element included in the embodiments described above and an element having a common function. Unless stated otherwise, the description of an embodiment may be applicable to other embodiments, and a repeated description related thereto is omitted.

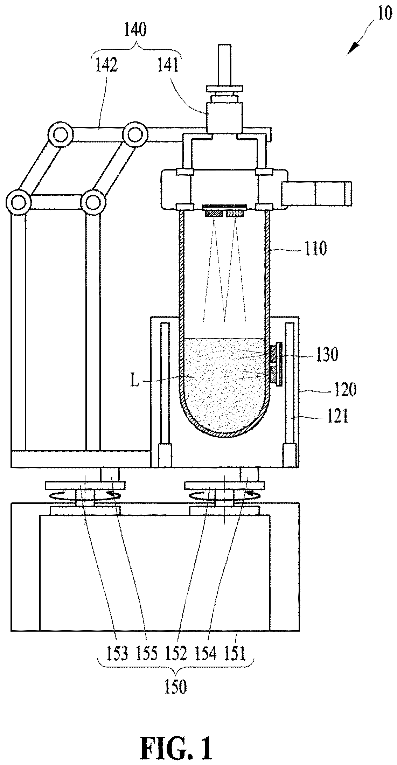

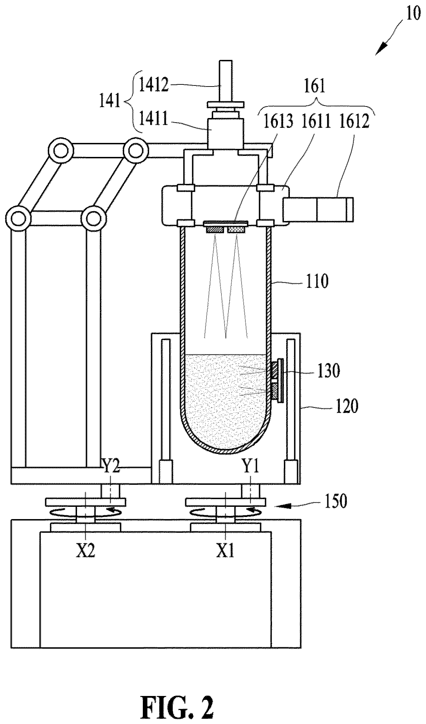

FIG. 1 and FIG. 2 illustrate a liquid processing apparatus according to one or more embodiments.

Referring to FIG. 1 and FIG. 2, a liquid processing apparatus 10 may include a container 110 storing a liquid L, a chamber 120 receiving at least a portion of the container 110, at least one sensor 130 disposed in the chamber 120, a sealing apparatus 140 connected to the chamber 120 and sealing the container 110, and a driving apparatus 150 providing a driving force to the chamber 120 and the sealing apparatus 140.

In one or more embodiments, the sealing apparatus 140 may include a cover 141 and a connecting element 142 disposed on an upper side of an opening of the container 110. One end of the connecting element 142 may support the cover 141. Another end of the connecting element 142 may be connected to a second connector 155 of the driving apparatus 150, which is described below.

In one or more embodiments, the liquid processing apparatus 10 may further include a cap assembly disposed between the container 110 and the cover 141. The cap assembly may include a first cap 161. The first cap 161 may be detachably attached to the container 110 and the cover 141.

In one or more embodiments, the first cap 161 may include a first body element 1611, a first gripping element 1612 extending from a side surface of the first body element 1611, and at least one sensor 1613 disposed on one surface of the first body element 1611 and facing an inner side of the container 110.

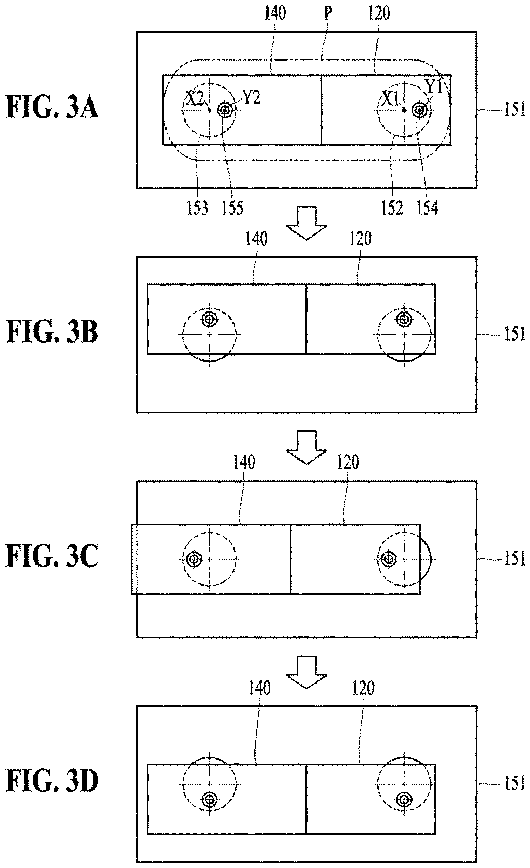

In one or more embodiments, as the chamber 120 and the sealing apparatus 140, by the driving force from the driving apparatus causing a reciprocal motion of the chamber 120 and the sealing apparatus 140, reciprocate in a unidirectional state, in which a position of the chamber relative to a position of the sealing apparatus remains constant, a suitable external force may be applied to the liquid L in the container 110 received in the chamber 120. The reciprocal motion need not be linear, back and forth only, but may include a curved back and forth motion as among FIG. 3A, FIG. 3B, FIG. 3C, and FIG. 3D. The chamber 120 and the sealing apparatus 140 may periodically reciprocate along a predetermined trajectory, which is described below. For example, reciprocating motion may include translational motion, circular motion, and the like. For example, the predetermined trajectory may take various forms such as linear, circular, elliptical, angular, and the like. For example, the external force applied to the liquid L may be a linear or nonlinear force or a rotational force.

At the same time, the at least one sensor 130 disposed in the chamber 120 or the at least one sensor 1613 disposed in the first cap 161 may sense a state of an inner portion of the container 110 in real time. The at least one sensor 130 disposed in the chamber 120 and the at least one sensor 1613 disposed in the first cap 161 may both be disposed to face an inner space of the container 110 or the liquid L stored in the container 110.

In the chamber 120 or the first cap 161, a single sensor may be disposed, or a plurality of sensors may be disposed simultaneously, as necessary. A sensor may be a wired or wireless sensor.

In one or more embodiments, a sensor may sense the temperature in a container or the temperature of a liquid stored in the container. For example, the sensor may be a contactless infrared sensor, a temperature sensor using a thermal imaging camera, or a contact-type thermistor sensor.

In one or more embodiments, the sensor may be a sensor for measuring the PH of the liquid stored in a container.

In one or more embodiments, the sensor may be an ultraviolet light-visible light spectrum analysis sensor.

In one or more embodiments, the sensor may be a vision sensor. For example, the sensor may be a camera sensor to obtain an image of an upper surface or a side surface of an inner portion of a container and may be a distance sensor to obtain surface information of the inner portion of the container.

In one or more embodiments, the sensor may be a sensor capable of measuring pressure in a container.

In one or more embodiments, the sensor may be a gas sensor capable of detecting a type of gas in a container.

In one or more embodiments, the chamber 120 may heat the container 110. The cover 141 may adjust pressure in the container 110 or allow a gas generated by the vaporization of the liquid L to flow externally from the liquid processing apparatus 10.

For this purpose, a heating element 121 may be disposed in the chamber 120. Heat may be transferred to the container 110 by the heating element 121. This heat may cause a solvent of the liquid L in the container 110 to vaporize and flow externally from the liquid processing apparatus 10, leaving only a solute in the container 110. A cooling element may be disposed in the chamber 120 according to one or more embodiments.

In addition, the cover 141 may press the first cap 161 and the container 110 to seal the container 110. The cover 141 may include a pump 1411 and a flow path 1412 extending to an outer side of the liquid processing apparatus 10. The pressure in the container 110 may be adjusted by the pump 1411. Furthermore, the inner side of the container 110 may remain in a vacuum state. Additionally, a gas generated by the vaporization of the solvent of the liquid L may be emitted to the outer side of the liquid processing apparatus 10 by the flow path 1412. The flow path 1412 may be connected to a condensing apparatus. The vaporized gas may be converted back to a liquid state retrieved by the condensing apparatus.

In one or more embodiments, the driving apparatus 150 may include a frame 151 including an actuator, a first rotation plate 152 disposed on an upper side of the frame 151 and rotating around a first axis X1, a second rotation plate 153 disposed on the upper side of the frame 151 and rotating around a second axis X2, a first connector 154 connecting the first rotation plate 152 to the chamber 120, and a second connector 155 connecting the second rotation plate 153 to the sealing apparatus 140. In addition, the driving apparatus 150 may include an additional mass weight to reduce vibration.

The first rotation plate 152 and the second rotation plate 153 may be driven simultaneously by a single actuator or separately by two actuators.

In one or more embodiments, a central axis Y1 of the first connector 154 may be disposed eccentrically (offset) with respect to the first axis X1 of the first rotation plate 152. A central axis Y2 of the second connector 155 may be disposed eccentrically (offset) with respect to the second axis X2 of the second rotation plate 153.

The first rotation plate 152 and the second rotation plate 153 may transfer a driving force to the chamber 120 and the sealing apparatus 140, respectively. However, the chamber 120 and the sealing apparatus 140 are connected to and dependent on each other, and thus, the chamber 120 may reciprocate together with the sealing apparatus 140 along a trajectory of a closed curve while staying in a unidirectional state, without rotating 360 degrees with respect to the sealing apparatus 140.

In other words, each of the chamber 120 and the sealing apparatus 140 may not separately rotate 360 degrees around an axis, and the chamber 120 and the sealing apparatus 140 may reciprocate along a predetermined trajectory while being connected to each other.

This structure may effectively prevent a wire of a wired sensor disposed in the chamber 120 or the first cap 161 from being tangled. Furthermore, the inner portion of the container 110 or a state of the liquid L may be sensed in real time while an external force is applied to the liquid L stored in the container 110.

FIG. 3A, FIG. 3B, FIG. 3C, and FIG. 3D are diagrams illustrating a state in which the chamber 120 and the sealing apparatus 140 of the liquid processing apparatus 10 of FIG. 1 reciprocate.

Hereinafter, a reciprocating state of the chamber 120 and the sealing apparatus 140 of the liquid processing apparatus 10 is described with reference to FIG. 3A, FIG. 3B, FIG. 3C, and FIG. 3D.

Referring to FIG. 3A, as the first rotation plate 152 and the second rotation plate 153 rotate, when the first connector 154 and the second connector 155 are at a first position, as in FIG. 3A, the chamber 120 and the sealing apparatus 140 may be parallel to the frame 151 on a first side of the frame 151.

Referring to FIG. 3B, as the first rotation plate 152 and the second rotation plate 153 rotate, when the first connector 154 and the second connector 155 are at a second position, as in FIG. 3B, the chamber 120 and the sealing apparatus 140 may be parallel to the frame 151 on a second side of the frame 151.

Referring to FIG. 3C, as the first rotation plate 152 and the second rotation plate 153 rotate, when the first connector 154 and the second connector 155 are at a third position, as in FIG. 3C, the chamber 120 and the sealing apparatus 140 may be parallel to the frame 151 on a third side of the frame 151.

Referring to FIG. 3D, as the first rotation plate 152 and the second rotation plate 153 rotate, when the first connector 154 and the second connector 155 are at a fourth position, as in FIG. 3D, the chamber 120 and the sealing apparatus 140 may be parallel to the frame 151 on a fourth side of the frame 151.

Through this repetitive motion, the chamber 120 and the sealing apparatus 140 may reciprocate along a trajectory P of the closed curve illustrated in FIG. 3A.

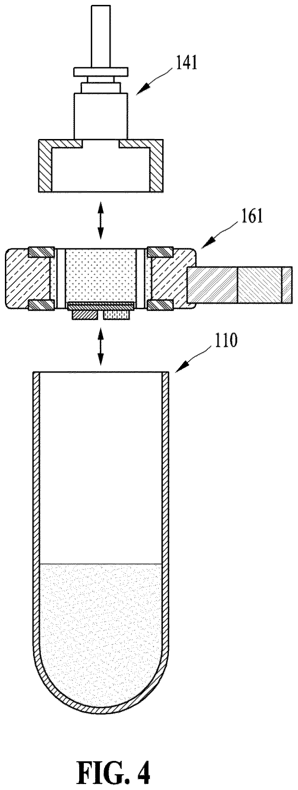

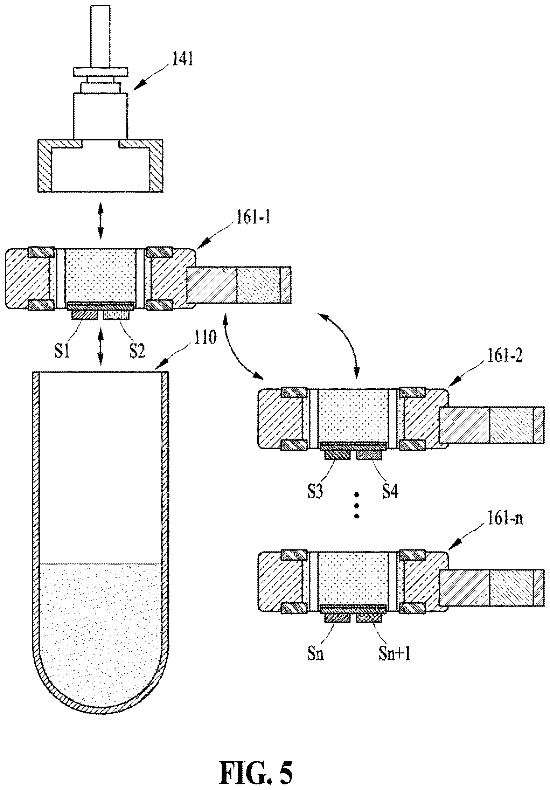

FIG. 4 is a diagram illustrating an arrangement of the cover 141, the first cap 161, and the container 110 of the liquid processing apparatus 10. FIG. 5 is a diagram illustrating an interchangeable relationship depicting the possibility of replacing the first cap 161 of the liquid processing apparatus 10 with various other first caps.

Referring to FIG. 4, an opening portion of the container 110 may contact one surface of the first cap 161. The cover 141 may contact another surface of the first cap 161. Accordingly, when the container 110, the first cap 161, and the cover 141 are in close contact, an inner portion of the container 110 may be sealed. On the other hand, the first cap 161 may be optionally detachable from the container 110 and the cover 141.

Referring to FIG. 5, the liquid processing apparatus 10 may include a plurality of first caps (e.g., 161-1, 161-2, ..., 161-n), as needed. In this case, different types of sensors may be disposed in each of the first caps.

For example, a first sensor S1 and a second sensor S2 may be disposed in a (1-1)-th cap 161-1, a third sensor S3 and a fourth sensor S4 may be disposed in a (1-2)-th cap 161-2, and an n-th sensor Sn and an (n+1)-th sensor Sn+1 may be disposed in a (1-n)-th cap 161-n.

Accordingly, a first cap in which a suitable sensor is disposed may be selected and disposed between the container 110 and the cover 141, as needed, effectively sensing the inner portion of the container 110 or a state of a liquid.

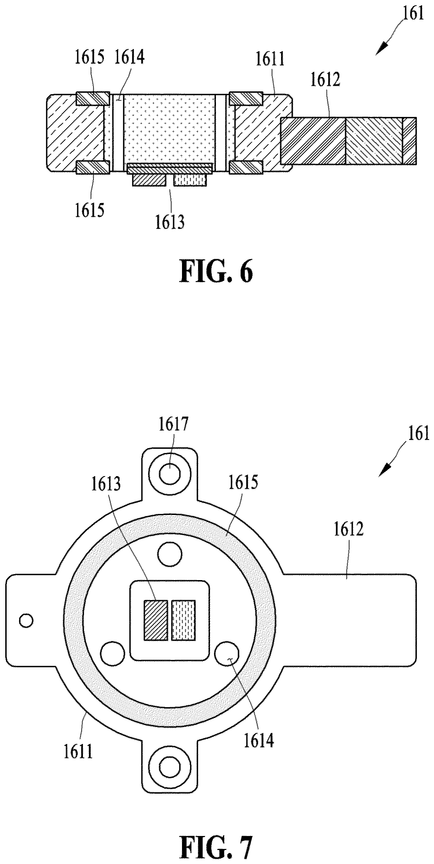

FIG. 6 is a cross-sectional view illustrating a first cap according to one or more embodiments. FIG. 7 is a rear view illustrating a first cap according to one or more embodiments.

Referring to FIG. 6 and FIG. 7, in one or more embodiments, the first cap 161 may include the first body element 1611, the first gripping element 1612 extending from a side surface of the first body element 1611, the at least one sensor 1613 disposed on one surface of the first body element 1611, at least one first hole 1614 penetrating the first body element 1611, a bending region 1615 formed of an elastic material on one surface or another surface of the first body element 1611, and a guide hole 1617 formed at an edge of the first body element 1611.

The first gripping element 1612 is a portion that is to be gripped by an operating apparatus, which is described below. The first hole 1614 is a flow path through which a gas generated by the vaporization of a solvent may flow. There may be a single first hole or a plurality of first holes. The bending region 1615, as a portion that is in contact with the cover 141 or the container 110, may improve the adhesion between the cover 141 or the container 110 and the first cap 161. The guide hole 1617 may function as a guide to reduce an error when the position of the first cap 161 is adjusted by the operating apparatus, which is described below.

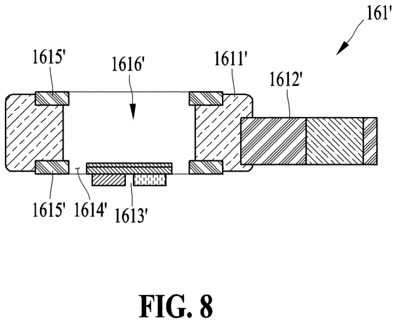

FIG. 8 is a cross-sectional view illustrating a first cap according to another embodiment.

Referring to FIG. 8, in another embodiment, a first cap 161' may include a first body element 1611', a first gripping element 1612' extending from a side surface of the first body element 1611', at least one sensor 1613' disposed on one surface of the first body element 1611', at least one first hole 1614' penetrating the first body element 1611', a bending region 1615' formed of an elastic material on one surface or another surface of the first body element 1611', and a first receiving element 1616' formed on another surface of the first body element 1611.

Unlike the first cap 161 of FIG. 6, the first cap 161' of FIG. 8 may include the first receiving element 1616' formed on another side of the first body element 1611.

In other words, the rear of one surface of the first body element 1611' in which the at least one sensor 1613' is formed may be formed as the first receiving element 1616' of a void space. With this structure, when stacking a plurality of first caps, a sensor of a subsequent first cap may be stably disposed in a first receiving element of a preceding first cap.

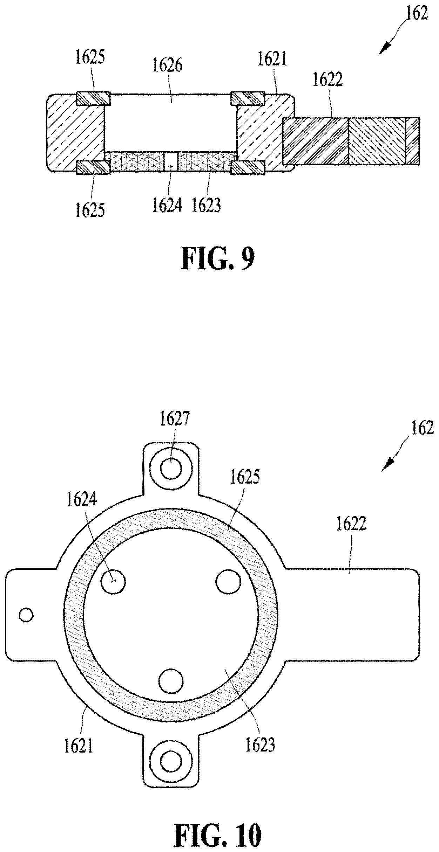

FIG. 9 is a cross-sectional view illustrating a second cap according to one or more embodiments. FIG. 10 is a rear view illustrating a second cap according to one or more embodiments.

Referring to FIG. 9 and FIG. 10, in one or more embodiments, a cap assembly may include a second cap 162 that may be disposed between a first cap and a container. The second cap 162 may include a second body element 1621, a second gripping element 1622 extending from a side surface of the second body element 1621, a window 1623 formed on one surface of the second body element 1621, at least one second hole 1624 penetrating the window 1623, a bending region 1625 formed of an elastic material on one surface or another surface of the second body element 1621, a second receiving element 1626 formed on another surface of the second body element 1621, and a guide hole 1627 formed at an edge of the second body element 1621.

The second gripping element 1622 is a portion gripped by an operating apparatus, which is described below. The second hole 1624 is a flow path through which a gas generated by the vaporization of a solvent may flow. There may be a single second hole or a plurality of second holes. The bending region 1625, as a portion that is in contact with the first cap 161 or the container 110, may improve the adhesion between the first cap 161 or the container 110 and the second cap 162. The guide hole 1627 may function as a guide to reduce an error when the position of the second cap 162 is adjusted by the operating apparatus, which is described below.

Additionally, the window 1623 may prevent liquid bumping caused by heating of a container, thus avoiding contamination of the sensor 1613 of the first cap 161, while securing a measurement visual field of the sensor 1613 of the first cap 161. Accordingly, the window 1623 may be made of a transparent material such as glass. The window 1623 contaminated by a liquid may be readily cleaned. However, while the window 1623 may prevent splashing of liquid caused by bumping/knocking, a vaporized gas may readily flow to the first cap 161 through the second hole 1624 formed on the window 1623.

Additionally, the rear of one surface of the second body element 1621 in which the window 1623 is formed may be formed as the second receiving element 1626 of a void space. With this structure, when stacking the first cap 161 on the rear of the second cap 162, the sensor 1613 of the first cap 161 may be stably disposed in the second receiving element 1626 of the second cap 162.

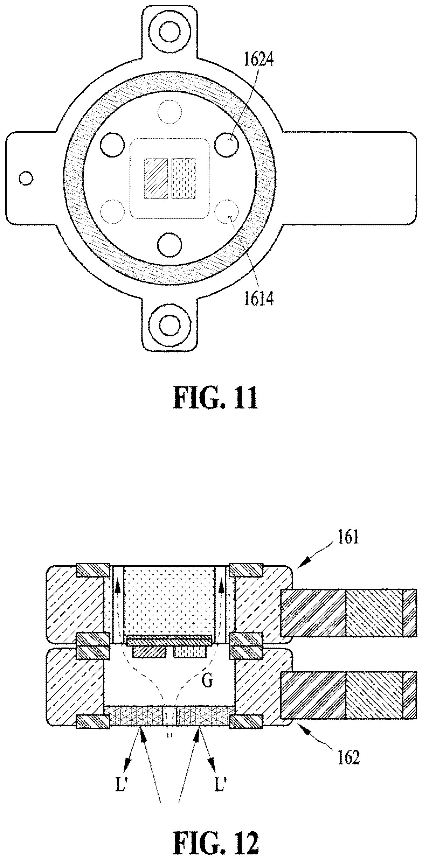

FIG. 11 is a rear view illustrating a state in which a first cap is coupled to a second cap, according to one or more embodiments. FIG. 12 is a cross-sectional view illustrating a state in which a first cap is coupled to a second cap, according to one or more embodiments.

Referring to FIGS. 11 and 12, the second cap 162 may be disposed in front of the first cap 161 and in contact with the first cap 161. As a bending region formed on another surface of the second cap 162 is in contact with a bending region formed on one surface of the first cap 161, the adhesion between the first cap 161 and the second cap 162 may be improved. The sensor 1613 of the first cap 161 may be stably disposed in the second receiving element 1626 of the second cap 162.

In addition, the at least one first hole 1614 of the first cap 161 and the at least one second hole 1624 of the second cap 162 may not be located on the same line. Furthermore, a visual field of the sensor 1613 of the first cap 161 may be stably secured by the window 1623 of the second cap 162.

With this structure of the first cap 161 and the second cap 162 of a cap assembly, a gas G generated by the vaporization of a liquid may flow through the at least one first hole 1614 of the first cap 161 and the at least one second hole 1624 of the second cap 162 to a cover. The window 1623 of the second cap 162 may prevent a liquid L' dispersed by heating from moving toward the sensor 1613 of the first cap 161.

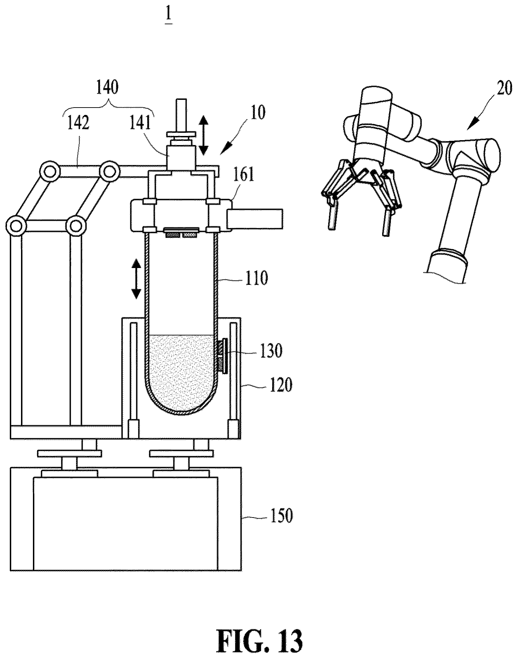

FIG. 13 is a diagram illustrating a liquid processing system according to one or more embodiments.

Referring to FIG. 13, a liquid processing system 1 may include the liquid processing apparatus 10 processing a liquid and an operating apparatus 20 disposed on an outer side of the liquid processing apparatus 10. The liquid processing apparatus 10 may include the container 110 storing a liquid, the chamber 120 receiving at least a portion of the container 110, the at least one sensor 130 disposed in the chamber 120, the sealing apparatus 140 connected to the chamber 120 and sealing the container 110, the driving apparatus 150 providing a driving force to the chamber 120 and the sealing apparatus 140, and the first cap 161 of a cap assembly disposed between the container 110 and the cover 141 of the sealing apparatus 140.

The chamber 120 and the sealing apparatus 140 may reciprocate together along a trajectory of a closed curve without rotating with respect to each other. The at least one sensor 130 may sense the container 110.

The sealing apparatus 140 may include the cover 141 disposed on an upper side of an opening of the container 110 and the connecting element 142. The container 110 or the first cap 161 of the cap assembly may be replaced using the operating apparatus 20. The replacement of the first cap 161 may be automatically performed by a previously input program.

In one or more embodiments, the operating apparatus 20 may be formed as a manipulator.

In one or more embodiments, the position of the cover 141 may be vertically controlled such that the operating apparatus 20 easily conducts the process of replacing the first cap 161. Furthermore, the chamber 120 may be equipped with a separate lifting element to vertically control the position of the container 110 received in the chamber 120.

Additionally, the container 110 as well as the first cap 161 may be replaced using the operating apparatus 20.

When the first cap 161 is coupled to the second cap 162, the first cap 161 and the second cap 162 may be replaced at the same time using the operating apparatus 20. In other words, the operating apparatus 20 may grip both the first cap 161 and the second cap 162 stacked together.

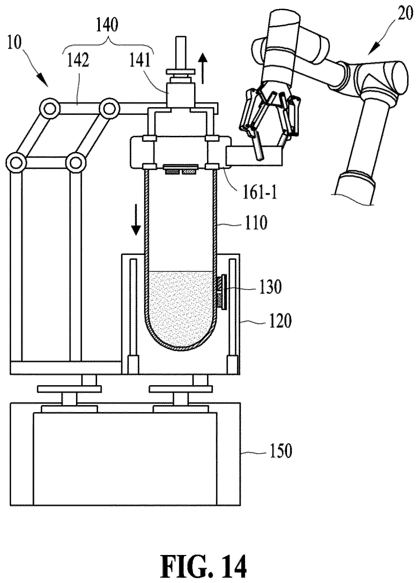

FIGS. 14, 15, and 16 are diagrams illustrating an operating state of a liquid processing system according to one or more embodiments.

Hereinafter, a process, performed by a liquid processing system, of automatically replacing the (1-1)-th cap 161-1 with the (1-2)-th cap 161-2 is described with reference to FIGS. 14, 15, and 16.

Referring to FIG. 14, the operating apparatus 20 may grip a (1-1)-th gripping element of the (1-1)-th cap 161-1. The cover 141 may move upward while the container 110 may move downward such that the (1-1)-th cap 161-1 is readily attached to and detached from the container 110 and the cover 141.

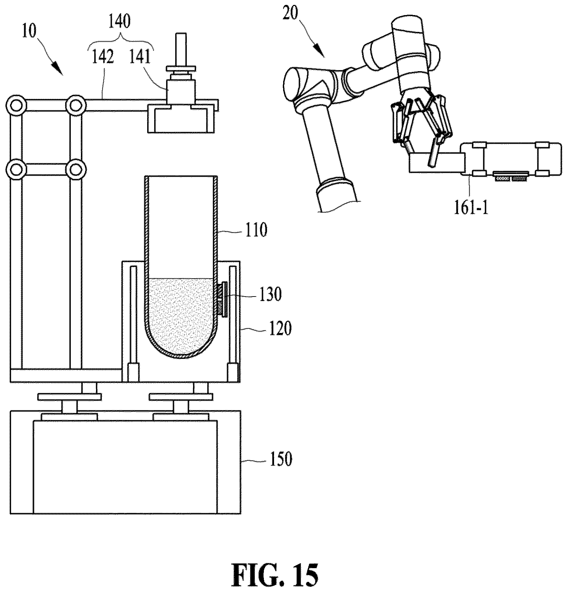

Referring to FIG. 15, the operating apparatus 20 may move the (1-1)-th cap 161-1 removed from the container 110 and the cover 141 externally from the liquid processing apparatus 10. Then, the operating apparatus 20 may place the (1-1)-th cap 161-1 at a preset position.

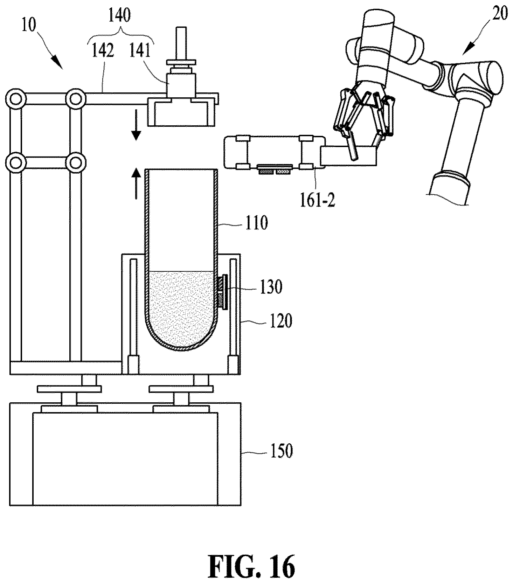

Then, referring to FIG. 16, the operating apparatus 20 may grip a (1-2)-th gripping element of the (1-2)-th cap 161-2, a cap to be newly attached, and place the (1-2)-th cap 161-2 between the container 110 and the cover 141.

When the (1-2)-th cap 161-2 is correctly disposed in a preset position, the cover 141 may move downward again and the container 110 move upward, and as a result, the cover 141, the (1-2)-th cap 161-2, and the container 110 may be firmly in contact with each other.

As needed, either the cover 141 or the container 110, but not both, may move upward or downward according to one or more embodiments.

In an embodiment, a liquid processing system may be applied to various technological fields, such as manufacturing equipment, experimental facilities, and the like, where the state of a liquid may be required to be analyzed by rotating or vaporizing the liquid.

Although example embodiments have been described with reference to the drawings, one of ordinary skill in the art may apply various technical modifications and variations based thereon. For example, suitable results may be achieved if the described techniques are performed in a different order, and/or if components in a described system, architecture, device, or circuit are combined in a different manner, and/or replaced or supplemented by other components or their equivalents.

## Claims

1. A liquid processing apparatus comprising:
a container configured to store a liquid;
a chamber configured to accommodate at least a portion of the container;
at least one sensor in the chamber;
a sealing apparatus connected to the chamber and configured to seal the container; and
a driving apparatus configured to provide a driving force to the chamber and the sealing apparatus, the driving force causing a reciprocal motion of the chamber and the sealing apparatus,
wherein the chamber and the sealing apparatus are configured to, by the reciprocal motion, reciprocate while staying in a unidirectional state in which a position of the chamber relative to a position of the sealing apparatus remains constant, and
wherein the at least one sensor is configured to sense an inner portion of the container.

2. The liquid processing apparatus of claim 1, wherein the chamber and the sealing apparatus are configured to, in the unidirectional state, reciprocate together along a trajectory of a closed curve and without rotating with respect to each other.

3. The liquid processing apparatus of claim 2, wherein the driving apparatus comprises:
a frame comprising an actuator;
a first rotation plate disposed on an upper side of the frame and configured to rotate around a first axis;
a second rotation plate disposed on the upper side of the frame and configured to rotate around a second axis;
a first connector configured to connect the first rotation plate to the chamber; and
a second connector configured to connect the second rotation plate to the sealing apparatus.

4. The liquid processing apparatus of claim 3,
wherein a central axis of the first connector is offset with respect to the first axis of the first rotation plate, and
wherein a central axis of the second connector is offset with respect to the second axis of the second rotation plate.

5. The liquid processing apparatus of claim 3 or 4, wherein the sealing apparatus comprises:
a cover disposed on an upper side of an opening of the container; and
a connecting element comprising a first end supporting the cover and a second end connected to the second connector.

6. The liquid processing apparatus of claim 5, wherein the chamber is configured to heat the container, and
wherein the cover is configured to adjust pressure in the container or direct a gas, generated by vaporization of the liquid, to flow externally from the liquid processing apparatus.

7. The liquid processing apparatus of claim 6, further comprising:
a cap assembly between the container and the cover,
wherein the cap assembly is detachably attached to the container and the cover.

8. The liquid processing apparatus of claim 7, wherein the cap assembly comprises a first cap, and
wherein the first cap comprises:
a first body element;
a first gripping element extending from a side surface of the first body element; and
at least one other sensor, other than the at least one sensor, disposed on a surface of the first body element and facing an inner side of the container.

9. The liquid processing apparatus of claim 8, wherein the first cap further comprises at least one first hole in the first body element.

10. The liquid processing apparatus of claim 9, wherein the cap assembly further comprises a second cap disposed between the first cap and the container, and
wherein the second cap comprises:
a second body element;
a second gripping element extending from a side surface of the second body element;
a window on a surface of the second body element; and
at least one second hole in the window.

11. The liquid processing apparatus of claim 10, wherein the at least one first hole and the at least one second hole are unaligned relative to each other.

12. The liquid processing apparatus of claim 11, wherein the cover is further configured to direct the gas, generated by vaporization of the liquid, to flow externally from the liquid processing apparatus by flowing through the at least one first hole and the at least one second hole to the cover.

13. The liquid processing apparatus of any of claims 10 to 12, wherein the second cap is configured to prevent the liquid, dispersed by heating, from moving to the first cap.

14. The liquid processing apparatus of any of claims 10 to 13, wherein a bending region is on the first body element of the first cap or the second body element of the second cap,
wherein the bending region comprises an elastic material.

15. A liquid processing system comprising:
a liquid processing apparatus according to any preceding claim configured to process a liquid; and
an operating apparatus on an outer side of the liquid processing apparatus,
